Europäisches Patentamt

European Patent Office

Office européen des brevets

(19)

(11) Numéro de publication: **0 539 263 B1**

(12) **FASCICULE DE BREVET EUROPEEN**

(45) Date de publication de fascicule du brevet: **22.03.95** (51) Int. Cl.⁶: **B60T 8/00**

(21) Numéro de dépôt: **92402771.7**

(22) Date de dépôt: **09.10.92**

---

(54) **Procédé et dispositif de freinage de véhicules par asservissement du couple de freinage appliqué sur une roue.**

---

(30) Priorité: **23.10.91 FR 9113119**

(43) Date de publication de la demande:
**28.04.93 Bulletin 93/17**

(45) Mention de la délivrance du brevet:
**22.03.95 Bulletin 95/12**

(84) Etats contractants désignés:
**BE DE ES FR GB IT NL SE**

(56) Documents cités:
**EP-A- 0 219 023      EP-A- 0 252 595**
**WO-A-89/10863       DE-A- 2 204 092**
**US-A- 3 508 795      US-A- 3 967 862**

**PROCEEDINGS OF THE 1990 AMERICAN CONTROL CONFERENCE vol. 2, 23 Mai 1990,SAN DIEGO, CALIFORNIA pages 1856 - 1861 HAN-SHUE TAN ET AL. 'AN ADAPTIVESLIDING MODE VEHICLE TRACTION CONTROLLER DESIGN'**

(73) Titulaire: **THOMSON-CSF**
**173, Boulevard Haussmann**
**F-75008 Paris (FR)**

(72) Inventeur: **Menard, Christian**
**Thomson-CSF,**
**SCPI-Cédex 67**
**F-92045 Paris La Défense (FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

---

## Description

La présente invention concerne un procédé et dispositif de freinage de véhicules par asservissement du couple de freinage appliqué sur une roue. Elle s'applique notamment aux systèmes de freinage des véhicules et particulièrement de leurs roues. Plus généralement, l'invention concerne le freinage de tous les véhicules devant être effectué dans des conditions de haute sécurité.

Des brevets et demandes de brevets US - A 3 508 795, DE - A 2 204 092 et EP - A - 2 252 595 présentent des exemples de commande ou de contrôle de freinage.

Les dispositifs de contrôle de freinage connus actuellement utilisent principalement comme paramètre de base la mesure de la vitesse de rotation des roues. A l'aide de ce paramètre et de l'équation caractéristique du freinage, ils contrôlent les variations d'accélération ou de décélération de la roue. Par ailleurs, d'autres dispositifs contrôlent, grâce à la mise en oeuvre d'un asservissement de vitesse, la vitesse de la zone freinée qui, comparée avec la vitesse de référence du véhicule, détermine le maintien de la roue freinée à une valeur de glissement fixe, le glissement étant la différence entre la vitesse du véhicule et la vitesse de rotation de la roue multipliée par son rayon.

Dans les deux cas précédents, la performance du dispositif est en relation directe avec le nombre de signaux de mesure par tour de roue délivré par le capteur monté sur la roue à contrôler. Selon ces applications, ce nombre peut varier de 50 à 200 par tour de roue, ce qui nécessite des capteurs sophistiqués coûteux et insuffisamment fiables. Ces procédés présentent d'autres inconvénients ; en particulier, la détection de la décélération de la vitesse de la roue est difficilement réalisable lorsque les courbes représentant l'adhérence en fonction du glissement présentent un faible maximum ou sont plates comme celles rencontrées dans les cas où le sol est humide par exemple. En fait, ces procédés n'assurent pas une optimisation de la distance d'arrêt mais évitent le blocage des roues. Le rendement de freinage des systèmes réalisés selon ces procédés est d'environ 60 % à 70 %, ce rendement qui traduit l'efficacité de freinage est défini par le rapport entre la distance réelle de freinage obtenue et la distance théorique de freinage calculée pour une valeur maximum d'une courbe d'adhérence donnée. Enfin, ces procédés présentent l'inconvénient majeur qu'ils n'assurent pas une bonne sécurité au freinage des véhicules. En effet, les détections ou les régulations sont effectuées sur la vitesse de rotation des roues sans prendre en compte les couples de freinage exercés sur ces roues. Or, pour des consignes de vitesses indentiques, les couples de freinage exercés sur les roues sont en général différents, ce qui crée des dissymétries de freinage susceptibles de provoquer notamment des pertes de contrôle des trajectoires des véhicules.

Dans le but d'éviter ces incidents, il existe des procédés où le contrôle du freinage s'effectue par l'intermédiaire de deux systèmes, d'une part, une boucle de régulation de vitesse, d'autre part, un calculateur. La boucle de régulation assure la correction rapide du système en présence des perturbations, tandis que le calculateur, à partir des informations de vitesse de roue freinée et de couple de freinage, calcule la courbe d'adhérence entre le pneu et la piste, détermine le maximum de cette dernière et élabore un signal qui, modifiant la consigne du régulateur de vitesse, conduit le système à ce maximum. Alors que le régulateur de vitesse compare rapidement les écarts par rapport au glissement de consigne, le calculateur effectue une prérégulation en prenant en compte les tendances ou les dérives lentes et en modifiant la valeur de consigne du régulateur afin d'amener et de maintenir le fonctionnement du système au voisinage du maximum de la courbe d'adhérence. Néanmoins, ces méthodes supposent des relations linéaires entre d'une part, la pression exercée sur le frein et le courant de commande délivré par le régulateur et d'autre part, entre le couple de freinage exercé sur la roue et la pression exercée sur le frein. Or, en réalité, il n'existe pas de telles relations linéaires qui ne sont en fait que très approximatives. Pour s'affranchir de ce dernier inconvénient, des solutions proposent un asservissement direct du couple de freinage exercé sur chacune des roues du véhicule. Ces solutions, théoriquement satisfaisantes, sont cependant très difficiles à mettre en oeuvre à cause notamment du besoin de capteurs de couples et de vitesse très sophistiqués et très coûteux pour les rendre efficaces.

Le but de l'invention est de pallier les inconvénients précités, en particulier de simplifier la mise en oeuvre de l'asservissement du couple de freinage.

A cet effet, l'invention a pour objet un procédé de freinage de véhicules par asservissement du couple de freinage appliqué sur une roue, l'adhérence de la roue sur une piste de freinage étant définie par un point de fonctionnement variable sur une courbe d'adhérence fonction du glissement de la roue, caractérisé en ce que le paramètre d'asservissement du couple de freinage est le signe de la variation de la pente de la courbe d'adhérence au point de fonctionnement précité, le couple de freinage augmenant quand le signe de la variation de la pente au point de fonctionnement sur la courbe d'adhérence est négatif et le couple de freinage diminuant quand le signe de la variation de la pente au point de fonctionnement de la courbe d'adhérence est positif.

L'invention a également pour objet un dispositif pour la mise en oeuvre du procédé précité.

L'invention a pour principaux avantages qu'elle permet d'obtenir une efficacité de freinage maximum, de l'ordre de 95 %, qu'elle permet d'utiliser des capteurs de vitesse de réalisation simple et peu coûteuse et enfin qu'elle améliore la sécurité des véhicules en permettant de contrôler le couple de freinage sur chaque roue et de répartir le freinage selon les besoins.

D'autres caractéristiques et avantages de l'invention apparaîtront à l'aide de la description qui suit faite en regard des dessins annexés qui représentent :

- la figure 1, une courbe représentative de l'adhérence en fonction du glissement d'une roue ;
- la figure 2, une partie de la courbe d'adhérence de la figure 1
- la figure 3, une courbe d'adhérence sans maximum ;
- la figure 4, un synoptique mode de réalisation possible pour la mise en oeuvre du procédé selon l'invention ;
- la figure 5, une partie détaillée du synoptique de la figure 4.

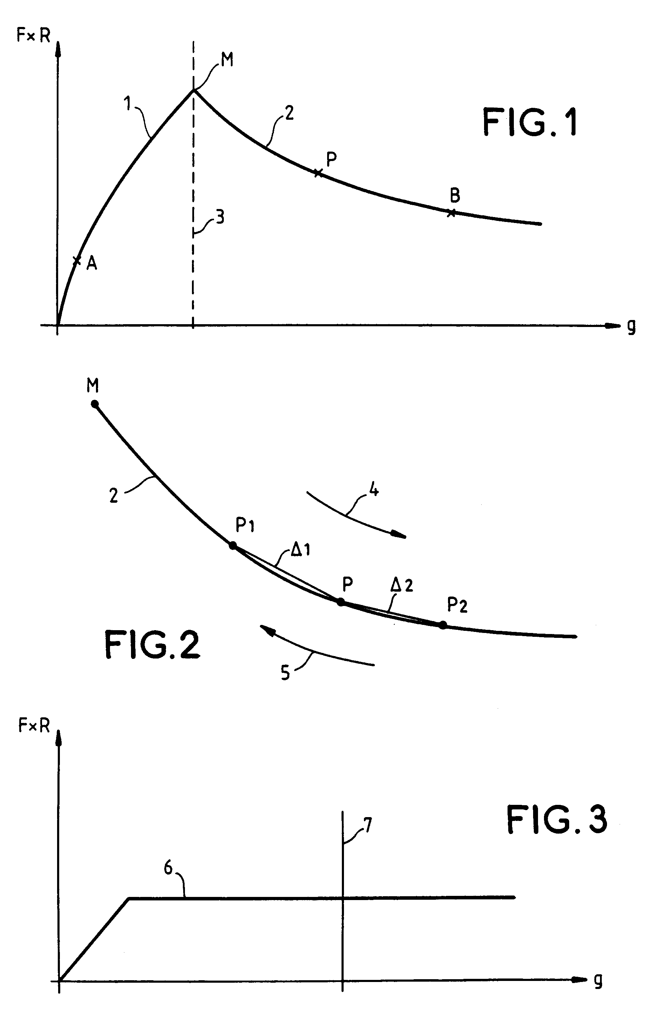

La figure 1 montre une courbe représentative de l'adhérence d'une roue sur une piste de freinage en fonction du glissement de cette roue. Cette adhérence est fonction à un instant donné de l'état de surface de la roue et de la piste. Sur la figure 1, les valeurs repérées suivant l'axe des ordonnées F x R correspondent à la multiplication de la traînée aérodynamique F par le rayon de la roue R, tandis que les valeurs repérées suivant l'axe des abscisses g correspondent au glissement de la roue par rapport au sol, le glissement g étant défini par le rapport

$$\frac{V - v_{roue}}{V}$$

où V est la valeur de la vitesse du véhicule par rapport au sol et $v_{roue}$ le produit de la vitesse angulaire $\omega$ de la roue par son rayon R, soit $v_{roue} = R\omega$. La courbe d'adhérence de la figure 1 comprend une partie 1 où la fonction est croissante et une partie 2 où la fonction est décroissante. Elle passe par une valeur maximum M. Toutes les courbes d'adhérence ont cette forme et sont, selon les conditions, plus ou moins aplaties, c'est-à-dire ont une valeur maximum M plus ou moins marquée. Les deux zones correspondant aux parties 1 et 2 sont séparées par un trait 3 comprenant le point M. L'adhérence est généralement définie par le rapport

$$\frac{F}{F_v}$$

où F est la traînée définie ci-dessus pour la figure 1 et Fv est la force portante. Néanmoins, dans les cas d'application de l'invention, cette force portante étant constante, celle-ci n'a pas été prise en compte dans la définition de l'adhérence. Au rapport

$$\frac{F}{F_v}$$

de définition de l'adhérence a été substitué le produit FR défini ci-dessus, ce produit est un nombre issu de l'équation caractéristique du freinage :

$$F - ff = \frac{I}{R}\frac{d\omega}{dt} = \qquad (1)$$

où F est la traînée, ff est la force de freinage, I le moment d'inertie de la roue (I est constant) et $\frac{d\omega}{dt}$ la dérivée de la vitesse angulaire de la roue par rapport au temps, en multipliant l'équation caractéristique (1) par le rayon de la roue, il vient :

$$FR - C = I\frac{d\omega}{dt} \qquad (2)$$

où C est le couple de freinage appliqué à la roue. Par la suite, l'adhérence sera définie par le produit FR.

En l'absence de freinage, le glissement g est théoriquement nul ; néanmoins, en réalité, des freinages parasites font qu'il existe toujours un léger glissement et le point de fonctionnement sur une courbe d'adhérence se situe par exemple à un point A qui n'est pas situé à l'origine comme l'indique la figure 1. Dès que le dispositif de freinage est activé, le point de fonctionnement se déplace dans le sens des glissements croissants, passe par le point maximum M et parcourt la partie 2 de la courbe d'adhérence en passant par le point B par exemple au risque de continuer vers un glissement très grand, dangereux, d'autant plus que, pour un même véhicule, le glissement, et par voie de conséquence l'adhérence, peuvent être différents d'une roue à l'autre.

En fait, pour assurer une efficacité de freinage maximum, il faut que le point de fonctionnement de la courbe d'adhérence 1,2 se situe au point M, c'est-à-dire là où l'adhérence est maximum.

Dans le cas du contrôle du freinage d'une roue par asservissement du couple de freinage qui lui est exercé, il est possible de connaître l'adhérence définie par le produit FR, en effet, d'après la relation (2) :

$$FR = C + I\frac{d\omega}{dt} \qquad (3).$$

Ainsi, les mesures du couple de freinage C et de la variation de vitesse angulaire de la roue $\frac{d\omega}{dt}$ donnent la valeur de FR. De même, les mesures de la vitesse du véhicule et de la vitesse de la roue donnent la valeur du glissement g. En fait, à tout instant, à l'aide de moyens de mesure du couple de freinage C appliqué à la roue, de moyens de mesure de la vitesse du véhicule et de la vitesse angulaire de la roue et de moyens de calcul, il est possible de définir l'adhérence de la roue et donc de définir un point de fonction P sur la courbe d'adhérence de la figure 1. Lors d'un freinage, le but de l'asservissement du couple de freinage doit être de maintenir, pour chaque roue, le point de fonctionnement sur la courbe d'adhérence au point M correspondant à la valeur maximum de l'adhérence. Pour cela il faut définir une relation, simple si possible, entre la position du point de fonctionnement sur la courbe d'adhérence et la valeur du couple de freinage appliqué sur la roue, c'est ce qui est réalisé par le procédé selon l'invention. En fait, le calcul seul du point de fonctionnement P défini par ses coordonnées FR et g ne permet pas de le situer par rapport au point M, puisque en pratique la courbe d'adhérence n'est jamais connue a priori. A fortiori, le point M d'adhérence maximum n'est pas connu. Il faut donc au moins utiliser la dérivée première de FR par rapport à g. Sur la partie 1 de la courbe d'adhérence, la dérivée première de FR par rapport à g,

$$\frac{dFR}{dg},$$

est positive alors que sur la partie 2, cette dérivée est négative. Au point M d'adhérence maximum, cette dérivée est positive à gauche et négative à droite, il n'y a pas de dérivée nulle en ce point, ce qui se traduit par un pic au niveau de ce point comme le montre la courbe d'adhérence de la figure 1 et comme cela est le cas en général pour toutes les courbes d'adhérence rencontrées dans la réalité. Le signe de cette dérivée première

$$\frac{dFR}{dg}$$

indique la position du point de fonctionnement P par rapport au point M. Néanmoins, sur la partie 2 notamment de la courbe d'adhérence, là où la dérivée première est négative, le signe en particulier de cette dérivée première

$$\frac{dFR}{dg}$$

ne donne aucune information sur l'évolution du point de fonctionnement P vers les glissements g croissants ou les glissements g décroissants. Pour toutes les courbes d'adhérence rencontrées dans la réalité, la dérivée seconde de FR par rapport à g,

$$\frac{d^2FR}{dg_2}$$

est strictement positive sur toute la partie 2 à droite du point M d'adhérence maximum, elle est en revanche strictement négative sur toute la partie 1 à gauche du point M. Cela n'est pas vérifié dans le cas où la courbe d'adhérence est plate et sans maximum. Dans ce cas, les dérivées

$$\frac{dFR}{dg} \text{ et } \frac{d^2FR}{dg_2}$$

sont nulles. Les courbes d'adhérence plates se rencontrent par exemple dans le cas de pneumatiques sur de l'acier par temps de pluie. La valeur de la dérivée seconde

$$\frac{d^2FR}{dg_2}$$

strictement positive indique que la valeur relative de la pente de la courbe est une fonction croissante du glissement g, alors que la pente est une fonction décroissante du glissement si

$$\frac{d^2FR}{dg_2}$$

est strictement négative.

La figure 2 présente la partie 2 de la courbe d'adhérence de la figure 1 au voisinage du point M d'adhérence maximum. Pour asservir le freinage au point M en fonction du couple de freinage exercé sur la roue, il faut pouvoir définir une relation entre l'évolution du point de fonctionnement P et ce couple. Le procédé selon l'invention utilise en fait le signe de la variation de la pente au point de fonctionnement P pour déterminer si le point P évolue vers le point M ou vers les glissements élevés, c'est cette information qui sera utilisée pour asservir le freinage au point d'adhérence maximum M par action sur le couple de freinage exercé sur chacune des roues.

Suivant le procédé selon l'invention, d'après la relation (3), les mesures du couple de freinage appliqué à la roue et les mesures des vitesses du véhicule et de la roue, un calculateur définit successivement les coordonnées de positions du point de fonctionnement sur la courbe d'adhérence, par exemple les coordonnées (g1, F1R), (g, FR) et (g2, F2R) respectivement de points P1, P et P2, puis il calcule pour ces trois points successifs

$$\frac{FR - F_1R}{g - g_1} = \Delta 1 \quad \text{et} \quad \frac{F_2R - FR}{g_2 - g} = \Delta 2$$

et calcule

$$\frac{\Delta 2 - \Delta 1}{g_2 - g_1} = S \ (4)$$

dont seul le signe est exploité.

La figure 2 illustre le procédé selon l'invention. Les points P1, P et P2 représentent trois positions successives du point de fonctionnement sur la courbe d'adhérence. $\Delta 1$ et $\Delta 2$ calculés précédemment sont les valeurs des pentes, en valeurs relatives, des segments repérés aussi par $\Delta 1$ et $\Delta 2$ sur la figure 2 et respectivement segments entre P1 et P d'une part et P et P2 d'autre part.

Le rapport

$$S = \frac{\Delta 2 - \Delta 1}{g_2 - g_1}$$

exprime la variation de pente sur la courbe d'adhérence lors du passage des positions du point de fonctionnement de P1 à P puis de P à P2. Or cette partie est une fonction croissante du glissement g.

Ainsi, si

$$S = \frac{\Delta 2 - \Delta 1}{g_2 - g_1}$$

est positif, cela signifie que le point de fonctionnement évolue vers les glissements croissants suivant la flèche 4 et s'éloigne du maximum M ; c'est le cas où P1 précède P qui précède P2. Dans ce cas il est visible sur la figure 2 que la pente $\Delta 2$ est inférieure à la pente $\Delta 1$ en valeur absolue, donc supérieure en valeur relative puisque ces pentes sont négatives. Au contraire, si le point de fonctionnement évolue vers les glissements décroissants, c'est-à-dire suivant la flèche 5 vers le point d'adhérence maximum M, cas où P2 précède P qui précède P1, le rapport

$$S = \frac{\Delta 1 - \Delta 2}{g_1 - g_2}$$

défini par le calculateur sera négatif.

Le même procédé peut être appliqué sur la partie 1 de la courbe à gauche du point d'adhérence maximum M avec les mêmes conclusions puisque les dérivés premières et secondes ont des signes inversés par rapport à ceux de la partie 2, S étant en fait le signe de la variation de la pente de la courbe d'adhérence au point de fonctionnement P. Ainsi, si le rapport S est positif, le point de fonctionnement s'éloigne du point M et si S est négatif, il s'en rapproche. En fait, le procédé de freinage selon l'invention effectue un asservissement du point de fonctionnement P sur le point d'adhérence maximum par un asservissement du couple de freinage ayant comme paramètre le signe du rapport S précédemment défini, S étant en fait le signe de la variation de la pente de la courbe d'adhérence au point de fonctionnement P. Finalement pour contrôler le freinage d'une roue par asservissement de son couple de freinage, le procédé selon l'invention exploite le fait que la dérivée seconde

$$\frac{d^2FR}{dg_2}$$

est strictement négative sur la partie 1 de la courbe d'adhérence à gauche de son maximum et strictement positive sur la partie 2 à droite de ce maximum tandis que la dérivée première est positive à droite et négative à gauche de son maximum.

Le procédé selon l'invention qui n'exploite que le signe du rapport S permet d'admettre des erreurs de précision sur la mesure des vitesses du véhicule et de la roue, et permet de simplifier les détecteurs de vitesse montés sur les roues, par exemple seulement quelques signaux de mesure par tour de roue sont nécessaires.

Dans le cas où la courbe d'adhérence est sans maximum, telle la courbe 6 de la figure 3 par exemple, une valeur de butée 7 dite de glissement maximum est mémorisée dans des circuits du calculateur par exemple de manière à éviter que le point de fonctionnement sur la courbe d'adhérence ne tende vers des glissements g élevés.

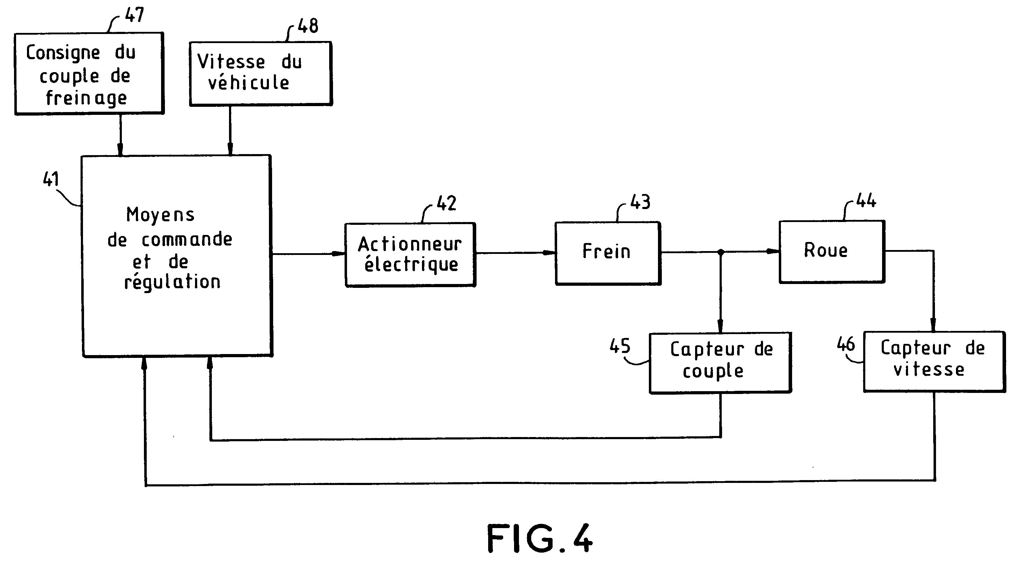

La figure 4 présente le synoptique d'un mode de réalisation possible pour la mise en oeuvre du procédé selon l'invention. Cette figure présente un dispositif appliqué à une roue, il est cependant possible de partager les moyens de calcul entre toutes les roues d'un véhicule. Le dispositif de la figure 4 comprend des moyens de commande et de régulation 41 dont la sortie commande un actionneur électrique 42 qui active le frein 43 par l'intermédiaire par exemple d'un organe hydraulique. Le frein 43 exerce un couple de freinage sur la roue 44. Un capteur de couple 45 placé sur le frein 43 délivre à l'unité de commande et de régulation la mesure du couple de freinage exercé sur la roue 44. Un capteur de vitesse 46 placé sur la roue délivre la mesure de la vitesse de la roue 44 à l'unité de commande et de régulation 41. Celle-ci prend par ailleurs en compte la consigne de couple de freinage 47, donnée par le pilote du véhicule et la vitesse du véhicule 48 délivrée par un capteur externe au dispositif de la figure 4, ce capteur peut par exemple être un radar, un faisceau laser ou un tachymètre.

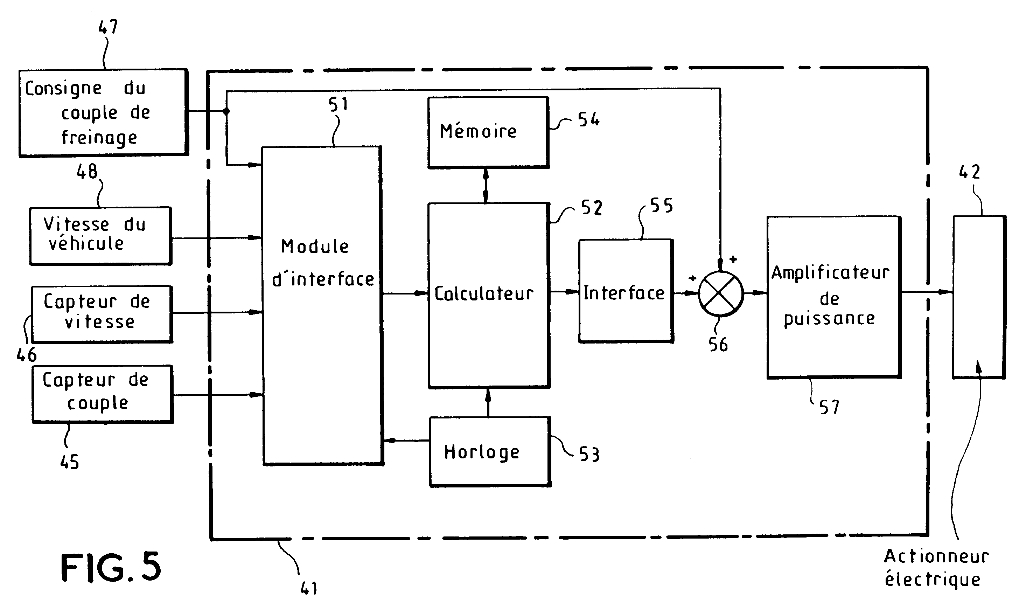

La figure 5 détaille un mode de réalisation possible des moyens de commande et de régulation 41. Un module d'interface 51 transforme les informations transmises par les capteurs de vitesse angulaire de la roue 46, de couple de freinage exercé sur la roue 45, de vitesse du véhicule 48 ainsi que la consigne de couple de freinage 47 transmises par le pilote, en valeurs numérisées pouvant être prise en compte par un calculateur numérique 52. Ce calculateur 52 peut par exemple contenir au moins une unité de calcul arithmétique standard associée à un opérateur flottant et à de la mémoire de travail. Pour numériser les informations transmises, le module d'interface 51 utilise des signaux d'horloge 53 et des convertisseurs analogiques-numériques si les signaux sont de type analogique ou des compteurs s'ils sont du type périodique ou fréquentiel. Le signal issu du capteur de vitesse angulaire de la roue 46 peut par exemple être traité selon deux méthodes, par mesures de fréquences dans le domaine des grandes vitesses et par mesures de périodes dans le domaine des moyennes et basses vitesses. A partir des paramètres issus du module d'interface 51 et d'une fréquence d'échantillonnage définie par exemple par l'horloge 53, le calculateur définit les valeurs de l'adhérence FR et du glissement g relatives à la roue, puis, à partir des valeurs d'adhérence et de glissement précédemment mémorisées en mémoire 54 par exemple, il définit le signe du rapport S calculé selon la relation (4).

La consigne du couple de freinage 47 codée par le module d'interface 51 informe le calculateur 52 que le véhicule est en phase de freinage, dès l'apparition de cette consigne, les circuits du calculateur se ré-initialisent par exemple et commencent les calculs. Une interface 55 couplée en sortie du calculateur 52 fournit un signal correctif combiné à la consigne du couple de freinage 47 par l'intermédiaire d'un additionneur 56. Ce signal correctif est fonction du signe du rapport S transmis par le calculateur 52 à l'interface 55. Ainsi, si le signe délivré par le calculateur 52 est positif par exemple, cela signifie que le point de fonctionnement s'éloigne du maximum sur la courbe d'adhérence, l'interface 55 délivre un signal correctif à la consigne du couple de freinage 47 de façon à diminuer le couple de freinage exercé sur la roue. Si le signe est négatif par exemple, cela signifie que le point de fonctionnement évolue vers le maximum d'adhérence, le signal correctif délivré par l'interface 55 ne modifie pas la consigne du couple de freinage 47 de façon à laisser évoluer le point de fonctionnement sur la courbe d'adhérence vers le point d'adhérence maximum. Le signal de commande issu de l'additionneur 56 attaque un amplificateur de puissance 57 dont le signal de sortie commande directement l'actionneur électrique 42. Ce signal peut être par exemple du type rapport cyclique variable de telle manière que plus ce rapport augmente, plus le couple de frein exercé sur la roue augmente. Dans ce cas, ce rapport cyclique est commandé par le signal de sortie de l'additionneur 56. Les moyens de calcul du dispositif présentés sur les figures 4 et 5, à savoir le calculateur 52, la mémoire 54 et l'horloge 53 peuvent par exemple être partagés entre plusieurs dispositifs de freinage de roues d'un même véhicule.

**Revendications**

1. Procédé de freinage de véhicules par asservissement du couple de freinage appliqué sur une roue, l'adhérence de la roue sur une piste de freinage étant définie par un point de fonctionnement (P) variable sur une courbe d'adhérence (1, 2) fonction du glissement (g) de la roue, caractérisé en ce que le paramètre d'asservissement du couple de freinage est le signe de la variation de la pente ($\Delta 1, \Delta 2$) de la courbe d'adhérence (1, 2) au point de fonctionnement (P) précité, le couple de freinage augmentant quand le signe de la variation de la pente ($\Delta 1, \Delta 2$) au point de fonctionnement (P) sur la courbe d'adhérence (1, 2) est négatif et le couple de freinage diminuant quand le signe de la variation de la pente ($\Delta 1, \Delta 2$) au point de fonctionnement (P) de la courbe d'adhérence (1, 2) est positif.

2. Procédé selon la revendication 1 caractérisé en ce que le couple de freinage est asservi de façon à ce que le point de fonctionnement (P) soit confondu avec le point d'adhérence maximum (M) de la courbe d'adhérence (1, 2).

3. Dispositif pour la mise en oeuvre du procédé selon l'une quelconque des revendications précédentes comprenant au moins des moyens de commande et de régulation (41) coupés à un actionneur électrique (42) couplé à un frein (43), un capteur de couple de freinage (45) et un capteur de vitesse angulaire de la roue (46) dont les sorties sont connectées à des entrées des moyens de commande et de régulation (41), caractérisé en ce que les moyens de commande et de régulation comportent des moyens pour déterminer le signe de la variation de la pente de la courbe d'adhérence à un point de fonctionnement (P) variable sur cette courbe.

4. Dispositif pour la mise en oeuvre du procédé selon l'une quelconque des revendications précédentes caractérisé en ce qu'il comprend au moins des moyens de commande et de régulation (41) couplés à un actionneur électrique (42) couplé à un frein (43), un capteur de couple de freinage (45) et le couple de freinage appliqué sur la roue (46), un calculateur (52) couplé à la sortie du module d'interface (51), une mémoire (54) couplée au calculateur (52), une horloge (53) commandant le calculateur (52) et le module d'interface (51), une interface (55) couplée à la sortie du calculateur (52), un additionneur (56) dont les entrées sont reliées à la sortie de l'interface (55) et à la consigne du couple de freinage (47), un amplificateur de puissance (57) couplé à la sortie de l'additionneur (56), la sortie de l'amplificateur de puissance (57) étant destinée à commander l'actionneur électrique (42).

5. Dispositif selon les revendications 3 et 4, caractérisé en ce que les moyens de calcul (52, 53, 54) peuvent être partagés entre plusieurs dispositifs de freinage de roues d'un même véhicule.

**Claims**

1. Method for braking vehicles by automatically controlling the braking torque applied to a wheel, the adherence of the wheel on a braking track being defined by an operating point (P) which can vary along an adherence curve (1, 2) as a function of the slip (g) of the wheel, characterized in that the parameter by means of which the braking torque is automatically controlled is the sign of the variation in slope ($\Delta 1$, $\Delta 2$) of the adherence curve (1, 2) at the aforementioned operating point (P), the braking torque increasing when the sign of the variation in slope ($\Delta 1$, $\Delta 2$) at the operating point (P) on the adherence curve (1, 2) is negative and the braking torque decreasing when the sign of the variation in slope ($\Delta 1$, $\Delta 2$) at the operating point (P) of the adherence curve (1, 2) is positive.

2. Method according to Claim 1, characterized in that the braking torque is automatically controlled so that the operating point (P) is coincident with the point (M) of maximum adherence of the adherence curve (1, 2).

3. Device for implementing the method according to either one of the preceding claims, comprising at least commanding and regulating means (41) coupled to an electric activator (42) coupled to a brake (43), a sensor (45) for sensing braking torque, and a sensor (46) for sensing angular velocity of the wheel, the outputs of which sensors are connected to inputs of the command and regulating means (41), characterized in that the command and regulating means include means for determining the sign of the variation in slope of the adherence curve at an operating point (P) which can vary along this curve.

4. Device for the implementation of the method according to any one of the preceding claims, characterized in that it comprises at least command and regulating means (41) which are coupled to an electric activator (42) coupled to a brake (43), a sensor (45) for sensing the braking torque and the braking torque applied to the wheel (46), a computer (52) coupled to the output of the interface module (51), a memory (54) coupled to the computer (52), a clock (53) commanding the computer (52) and the interface module (51), an interface (55) coupled to the output of the computer (52), an adder (56), the inputs of which are connected to the output of the interface (55) and to the reference for the braking torque (47), a power amplifier (57) coupled to the output of the adder (56), the output of the power amplifier (57) being intended to command the electric actuator (42).

5. Device according to Claims 3 and 4, characterized in that the calculation means (52, 53, 54) may be split between several braking devices for wheels of one and the same vehicle.

**Patentansprüche**

1. Bremsverfahren für Fahrzeuge durch Nachregelung des Bremsmoments, das an einem Rad wirksam wird, wobei das Haften des Rads auf einer Bremsstrecke durch einen variablen Betriebspunkt (P) auf einer Haftungskurve (1, 2) definiert wird, die die Haftung abhängig vom Schlupf (g) des Rads darstellt, dadurch gekennzeichnet, daß der Nachregelungsparameter des Bremsmoments das Vorzeichen der Veränderung der Neigung (Δ1, Δ2) der Haftungskurve (1, 2) am vorgenannten Betriebspunkt (P) ist, wobei das Bremsmoment ansteigt, wenn das Vorzeichen der Veränderung der Neigung (Δ1, Δ2) am Betriebspunkt (P) auf der Haftungskurve (1, 2) negativ ist, während das Bremsmoment absinkt, wenn das Vorzeichen der Veränderung der Neigung (Δ1, Δ2) am Betriebspunkt auf der Haftungskurve (1, 2) positiv ist.

2. Verfahren nach Anspruch 1, dadurch gekennzeichnet, daß das Bremsmoment derart nachgeregelt wird, daß der Betriebspunkt (P) mit dem maximalen Haftungspunkt (M) der Haftungskurve (1, 2) zusammenfällt.

3. Vorrichtung zur Anwendung des Verfahrens nach einem beliebigen der vorhergehenden Ansprüche, die mindestens Steuer- und Regelmittel (41) aufweisen, die an ein an eine Bremse (43) gekoppeltes elektrisches Betätigungsglied (42), an einen Bremsmoment-Sensor (45) und an einen Sensor zur Messung der Winkelgeschwindigkeit des Rads (46) gekoppelt sind, deren Ausgänge an Eingänge der Steuer- und Regelmittel (41) angeschlossen sind, dadurch gekennzeichnet, daß die Steuer- und Regelmittel Mittel aufweisen, um das Vorzeichen der Veränderung der Haftungskurve an einem auf dieser Kurve variablen Betriebspunkt (P) zu bestimmen.

4. Vorrichtung zur Anwendung des Verfahrens nach einem beliebigen der vorhergehenden Ansprüche, dadurch gekennzeichnet, daß sie mindestens Steuer- und Regelmittel (41) aufweisen, die an ein an eine Bremse (43) gekoppeltes elektrisches Betätigungsglied (42), an einen Bremsmoment-Sensor (45) und an einen Sensor zur Messung des am Rad (46) wirksamen Bremsmoments gekoppelt sind und einen an den Ausgang des Schnittstellenmoduls (51) gekoppelten Rechner (52), einen an den Rechner (52) gekoppelten Speicher (54), einen Taktgeber (53), der den Rechner (52) und das Schnittstellenmodul (51) steuert, eine Schnittstelle (55), die an den Ausgang des Rechners (52) gekoppelt ist, einen Addierer (56), dessen Eingänge mit dem Ausgang der Schnittstelle (55) bzw. dem Sollwertgeber (47) des Bremsmoments verbunden sind, und einen Leistungsverstärker (57) enthalten, der an den Ausgang des Addierers (56) gekoppelt ist, wobei der Ausgang des Leistungsverstärkers (57) das elektrische Betätigungsglied (42) steuert.

5. Vorrichtung nach den Ansprüchen 3 und 4, dadurch gekennzeichnet, daß die Rechenmittel (52, 53, 54) für mehrere Bremsvorrichtungen von Rädern des gleichen Fahrzeugs zuständig sein können.

FIG.1

FIG.2

FIG.3

9

**FIG.4**

47 — Consigne du couple de freinage

48 — Vitesse du véhicule

41 — Moyens de commande et de régulation

42 — Actionneur électrique

43 — Frein

44 — Roue

45 — Capteur de couple

46 — Capteur de vitesse

EP 0 539 263 B1

FIG. 5

Consigne du couple de freinage — 47

Vitesse du véhicule — 48

Capteur de vitesse — 46

Capteur de couple — 45

Module d'interface — 51

Mémoire — 54

Calculateur — 52

Interface — 55

Horloge — 53

Amplificateur de puissance — 57

56

Actionneur électrique — 42

41

EP 0 539 263 B1

11